# EUROPEAN PATENT APPLICATION

(11) **EP 4 369 845 A1**
(43) Date of publication of application: **15.05.2024**
(21) Application number: 21948838.4
(22) Date of filing: 08.07.2021
(51) Int. Cl.: H04W 76/14

(54) **COMMUNICATION METHOD AND APPARATUS BASED ON PHYSICAL SIDELINK DATA CHANNEL, AND STORAGE MEDIUM**

(71) Applicant: Beijing Xiaomi Mobile Software Co., Ltd., Beijing 100085 (CN)
(72) Inventor: ZHAO, Wensu, Beijing 100085 (CN); ZHAO, Qun, Beijing 100085 (CN); LI, Mingju, Beijing 100085 (CN)
(74) Representative: Hughes, Andrea Michelle
(86) International application number: PCT/CN2021/105328
(87) International publication number: WO 2023/279342

(57) **Abstract**

The present disclosure relates to a communication method and apparatus based on a physical sidelink data channel, and a storage medium. The communication method based on a physical sidelink data channel is applied to a terminal, and comprises: determining a physical sidelink data channel, wherein the physical sidelink data channel comprises a plurality of initial sending positions of a sidelink signal; and sending the sidelink signal on an unlicensed band on the basis of the plurality of initial sending positions. In the present disclosure, the sidelink signal is sent on the unlicensed band on the basis of the plurality of initial sending positions, such that a transmission opportunity for the physical sidelink data channel can be increased after successful LBT.

## Description

### TECHNICAL FIELD

The present disclosure relates to a field of communication technologies, and particularly to a method and an apparatus for communication based on a physical sidelink shared channel, and a storage medium.

### BACKGROUND

Demands for a variety of new services and applications continue to emerge, and terminal sidelink has higher and higher performance requirements for transmission bandwidth, communication rate, communication delay, reliability, and scalability. A limited licensed spectrum can no longer meet the potential diverse application scenarios and requirements in the future, so it needs to research and design a sidelink-unlicensed technology that can be applied in the unlicensed frequency band.

In an unlicensed frequency band, channel monitoring is performed based on a listen before talk (LBT) mechanism. Data can only be transmitted when the channel is detected as idle. The introduction of the LBT mechanism makes it possible to transmit a sidelink signal only when the channel is detected as idle. Even when there is an opportunity to transmit the sidelink signal, if the channel is not detected as idle, the sidelink signal cannot be transmitted. That is, there is uncertainty in the transmission of the sidelink signal. In order to solve the uncertainty brought by the LBT mechanism and make the transmission time of control information and data more flexible, the design of a physical channel and a physical signal of the sidelink-unlicensed needs certain enhancements.

### SUMMARY

In order to overcome the problems existing in the related technologies, the present disclosure provides a method and an apparatus for communication base on a physical sidelink shared channel, and a storage medium.

According to a first aspect of embodiments of the present disclosure, there is provided a method for communication based on a physical sidelink shared channel. The method is applied to a terminal, and includes:
determining the physical sidelink shared channel, in which the physical sidelink shared channel includes more than one transmission start position for a sidelink signal; and transmitting a sidelink signal on an unlicensed frequency band based on the more than one transmission start position.

In an implementation, the physical sidelink shared channel includes resources of more than one mini slot scheduling shared channel, and a number of mini slots in the physical sidelink shared channel is equal to a number of transmission start positions for the sidelink signal. A first symbol in each of the more than one mini slot is an automatic gain control symbol, a last symbol in each of the more than one mini slot is a gap protect symbol, and symbols between the automatic gain control symbol and the gap protect symbol are configured to transmit the sidelink signal.

In an implementation, the number of mini slots is determined based on a number of symbols configured to transmit the sidelink signal and symbol length supported by the mini slots.

In an implementation, the number of mini slots is determined based on a number of symbols configured to transmit the sidelink signal, symbol length supported by the mini slots, and physical sidelink feedback channel resources.

In an implementation, determining the physical sidelink shared channel includes:
determining a physical sidelink shared channel used for a single transmission among more than one type of configured physical sidelink shared channel; in which each type of physical sidelink shared channel of the more than one type of physical sidelink shared channel includes more than one mini slot that each has a transmission start position, and numbers of mini slots included in respective physical sidelink shared channels are different.

In an implementation, determining the physical sidelink shared channel includes:
determining the physical sidelink shared channel used for a single transmission based on a number of mini slots indicated by radio resource control information, in which the number of mini slots corresponds to a type of physical sidelink shared channel.

According to a second aspect of embodiments of the present disclosure, there is provided a method for communication based on a physical sidelink shared channel. The method is applied to a network device, and includes:
configuring the physical sidelink shared channel, in which the physical sidelink shared channel includes more than one transmission start position for a sidelink signal; and transmitting indication information configured to indicate transmission of a sidelink signal on an unlicensed frequency band based on the more than one transmission start position.

In an implementation, the physical sidelink shared channel includes resources of more than one mini slot scheduling shared channel, and a number of mini slots in the physical sidelink shared channel is equal to a number of transmission start positions for the sidelink signal. A first symbol in each of the more than one mini slot is an automatic gain control symbol, a last symbol in each of the more than one mini slot is a gap protect symbol, and symbols between the automatic gain control symbol and the gap protect symbol are configured to transmit the sidelink signal.

In an implementation, the number of mini slots is determined based on a number of symbols configured to transmit the sidelink signal and symbol length supported by the mini slots.

In an implementation, the number of mini slots is determined based on a number of symbols configured to transmit the sidelink signal, symbol length supported by the mini slots, and physical sidelink feedback channel resources.

In an implementation, configuring the physical sidelink shared channel includes:
configuring more than one type of physical sidelink shared channel. Each type of physical sidelink shared channel of the more than one type of physical sidelink shared channel includes more than one mini slot that each has a transmission start position, and numbers of mini slots included in respective physical sidelink shared channels are different. The indication information is configured to indicate a physical sidelink shared channel used for a single transmission.

In an implementation, transmitting the indication information includes:
transmitting radio resource control information configured to indicate a number of mini slots, in which the number of mini slots corresponds to a type of physical sidelink shared channel.

According to a third aspect of embodiments of the present disclosure, there is provided an apparatus for communication based on a physical sidelink shared channel. The apparatus includes:
a processing unit, configured to determine the physical sidelink shared channel, in which the physical sidelink shared channel includes more than one transmission start position for a sidelink signal; and a transmission unit, configured to transmit a sidelink signal on an unlicensed frequency band based on the more than one transmission start position.

In an implementation, the physical sidelink shared channel includes resources of more than one mini slot scheduling shared channel, and a number of mini slots in the physical sidelink shared channel is equal to a number of transmission start positions for the sidelink signal. A first symbol in each of the more than one mini slot is an automatic gain control symbol, a last symbol in each of the more than one mini slot is a gap protect symbol, and symbols between the automatic gain control symbol and the gap protect symbol are configured to transmit the sidelink signal.

In an implementation, the number of mini slots is determined based on a number of symbols configured to transmit the sidelink signal and symbol length supported by the mini slots.

In an implementation, the number of mini slots is determined based on a number of symbols configured to transmit the sidelink signal, symbol length supported by the mini slots, and physical sidelink feedback channel resources.

In an implementation, the processing unit determines a physical sidelink shared channel used for a single transmission among more than one type of configured physical sidelink shared channel; in which each type of physical sidelink shared channel of the more than one type of physical sidelink shared channel includes more than one mini slot that each has a transmission start position, and numbers of mini slots included in respective physical sidelink shared channels are different.

In an implementation, the processing unit determines the physical sidelink shared channel used for a single transmission based on a number of mini slots indicated by radio resource control information, in which the number of mini slots corresponds to a type of physical sidelink shared channel.

According to a fourth aspect of embodiments of the present disclosure, there is provided an apparatus for communication based on a physical sidelink shared channel. The apparatus includes:

a processing unit, configured to configure the physical sidelink shared channel, in which the physical sidelink shared channel includes more than one transmission start position for a sidelink signal; and a transmission unit, configured to transmit indication information configured to indicate transmission of a sidelink signal on an unlicensed frequency band based on the more than one transmission start position.

In an implementation, the physical sidelink shared channel includes resources of more than one mini slot scheduling shared channel, and a number of mini slots in the physical sidelink shared channel is equal to a number of transmission start positions for the sidelink signal. A first symbol in each of the more than one mini slot is an automatic gain control symbol, a last symbol in each of the more than one mini slot is a gap protect symbol, and symbols between the automatic gain control symbol and the gap protect symbol are configured to transmit the sidelink signal.

In an implementation, the number of mini slots is determined based on a number of symbols configured to transmit the sidelink signal and symbol length supported by the mini slots.

In an implementation, the number of mini slots is determined based on a number of symbols configured to transmit the sidelink signal, symbol length supported by the mini slots, and physical sidelink feedback channel resources.

In an implementation, the processing unit configures more than one type of physical sidelink shared channel. Each type of physical sidelink shared channel of the more than one type of physical sidelink shared channel includes more than one mini slot that each has a transmission start position, and numbers of mini slots included in respective physical sidelink shared channels are different. The indication information is configured to indicate a physical sidelink shared channel used for a single transmission.

In an implementation, the transmission unit transmits radio resource control information configured to indicate a number of mini slots, in which the number of mini slots corresponds to a type of physical sidelink shared channel.

According to a fifth aspect of embodiments of the present disclosure, there is provided an apparatus for communication based on a physical sidelink shared channel. The apparatus includes: a processor, and a memory for storing a computer program executable by the processor. The processor is configured to perform the method for communication based on a physical sidelink shared channel described in the first aspect or any implementation of the first aspect.

According to a sixth aspect of embodiments of the present disclosure, there is provided an apparatus for communication based on a physical sidelink shared channel. The apparatus includes:
a processor, and a memory for storing a computer program executable by the processor. The processor is configured to perform the method for communication based on a physical sidelink shared channel described in the second aspect or any implementation of the second aspect.

According to a seventh aspect of embodiments of the present disclosure, there is provided a storage medium having instructions stored thereon. The instructions of the storage medium, when being executed by a processor of a terminal, enable the terminal to perform the method for communication based on a physical sidelink shared channel described in the first aspect or any implementation of the first aspect.

According to an eight aspect of embodiments of the present disclosure, there is provided a storage medium having instructions stored thereon. The instructions of the storage medium, when being executed by a processor of a network device, enable the network device to perform the method for communication based on a physical sidelink shared channel described in the second aspect or any implementation of the second aspect.

The technical solutions provided by the embodiments of the present disclosure can include the following beneficial effects: the physical sidelink shared channel includes more than one transmission start position for the sidelink signal, and the sidelink signal is transmitted on the unlicensed frequency band based on the more than one transmission start position, which can increase the transmission opportunity of the physical sidelink shared channel after the LBT is successful.

It is to be understood that both the foregoing general description and the following detailed description are exemplary and explanatory only and are not restrictive of the present disclosure.

### BRIEF DESCRIPTION OF THE DRAWINGS

The accompanying drawings, which are incorporated in and constitute a part of the description, illustrate embodiments consistent with the present disclosure and together with the description serve to explain the principles of the present disclosure.
Fig. 1 is a schematic diagram of a wireless communication system according to an exemplary embodiment.
Fig. 2 shows a PSSCH transmission structure of NR sidelink in the related art.
Fig. 3 shows a PSSCH transmission structure of NR sidelink in the related art.
Fig. 4 is a flowchart showing a method for communication based on a PSSCH according to an exemplary embodiment.
Fig. 5 shows a PSSCH structure according to an exemplary embodiment of the present disclosure.
Fig. 6 shows a PSSCH structure according to an exemplary embodiment of the present disclosure.
Fig. 7 is a flowchart showing a method for communication based on a PSSCH according to an exemplary embodiment.
Fig. 8 is a flowchart showing a method for communication based on a PSSCH according to an exemplary embodiment.
Fig. 9 is a flowchart showing a method for communication based on a PSSCH according to an exemplary embodiment.
Fig. 10 is a block diagram of an apparatus for communication based on a PSSCH according to an exemplary embodiment.
Fig. 11 is a block diagram of an apparatus for communication based on a PSSCH according to an exemplary embodiment.
Fig. 12 is a block diagram showing an apparatus for communication based on a PSSCH according to an exemplary embodiment.
Fig. 13 is a block diagram showing an apparatus for communication based on a PSSCH according to an exemplary embodiment.

### DETAILED DESCRIPTION

Reference will now be made in detail to exemplary embodiments, examples of which are illustrated in the accompanying drawings. When the following description refers to the accompanying drawings, the same numerals in different drawings refer to the same or similar elements unless otherwise indicated. The implementations described in the following exemplary examples do not represent all implementations consistent with the present disclosure. Rather, they are merely examples of apparatuses and methods consistent with aspects of the present disclosure as recited in the appended claims.

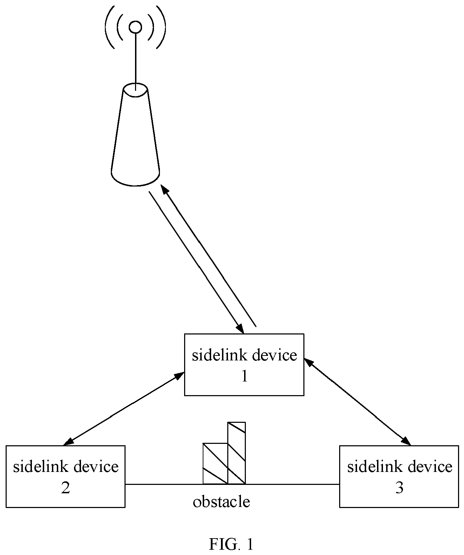

A method for communication method based on a physical sidelink shared channel provided by embodiments of the present disclosure is applicable to a sidelink system shown in FIG. 1. Referring to FIG. 1, in a scenario where sidelink is performed between sidelink devices, a network device configures various transmission parameters for data transmission for a sidelink device 1. The sidelink device 1, a sidelink device 2 and a sidelink device 3 perform sidelink. There may be an obstacle between the sidelink device 2 and the sidelink device 3. A link for communication between the network device and the sidelink devices is an uplink and downlink, and a link between sidelink devices is a sidelink.

In the present disclosure, the communication scenario of sidelink between sidelink devices may be a vehicle to everything (V2X) service scenario, in which V represents an on-board device, and X represents any object that interacts with the on-board device. Currently X mainly includes an on-board device, a handheld device, a traffic roadside infrastructure and a network. Information modes of V2X interaction include: a vehicle to vehicle (V2V) interaction, a vehicle to infrastructure (V2I) interaction, a vehicle to pedestrian (V2P) interaction, a vehicle to network (V2N) interaction.

With the development of the new generation of 5G mobile communication technology, 5G NR technology is used in 3GPP Rel-16 to support new V2x communication services and scenarios, such as vehicles platooning, extended sensors, advanced driving, and remote driving, etc. Generally, 5G V2x Sidelink can provide higher communication rate, shorter communication delay, and more reliable communication quality.

The communication scenario of sidelink between sidelink devices may also be a device-to-device (D2D) communication scenario. The sidelink devices for sidelink in embodiments of the present disclosure may include various handheld devices, on-board devices, wearable devices, and computing devices with wireless communication functions, or other processing devices connected to wireless modems, as well as various forms of user equipment (UE), mobile station (MS), terminal, terminal equipment and so on. For the convenience of description, the embodiments of the present disclosure will be described below by taking the sidelink device as a terminal as an example, where terminal and UE are sometimes used interchangeably, but those skilled in the art should understand the consistency of their meanings.

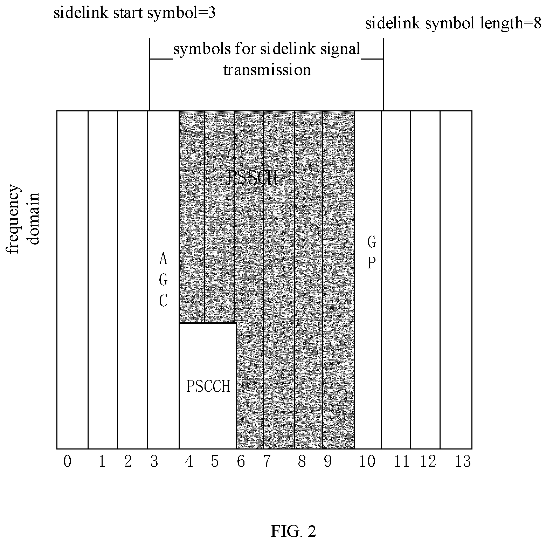

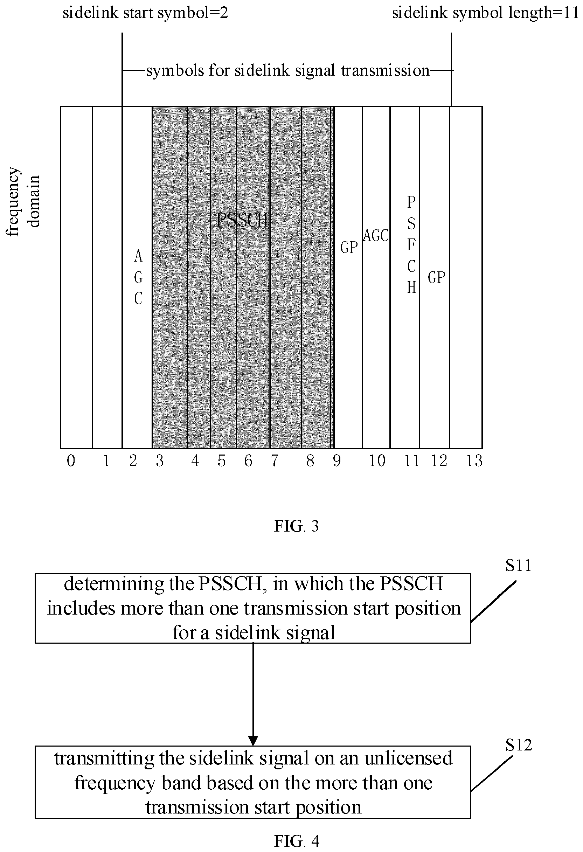

In related technologies, communication transmission based on a physical sidelink shared channel (PSSCH)/physical sidelink control channel (PSCCH) is performed in the sidelink. Fig. 2 and Fig. 3 show PSSCH transmission structures of NR sidelink in the related art. Referring to FIG. 2 and FIG. 3, when PSSCH-based communication is performed in the traditional technology, resources for sidelink (i.e., sidelink resources for transmitting a sidelink signal) are allocated. Usually, a first symbol of the sidelink resource for transmitting the sidelink signal is an automatic gain control (AGC) symbol, and a last symbol is a gap protect (GP) symbol. When transmitting a sidelink signal, the PSSCH transmission usually starts after detecting the AGC symbol and duplicating the AGC symbol.

In related technologies, a sidelink-unlicensed technology applicable to an unlicensed frequency band is researched and designed. In the sidelink-unlicensed, an LBT mechanism is further used for channel monitoring. Data can only be sent when the channel is detected to be idle. The introduction of the LBT mechanism makes the transmission of sidelink signals in sidelink-unlicensed only when an AGC symbol configured in a slot is detected and the channel is detected as idle. The sidelink signal cannot be sent even when the channel is detected as idle, while the AGC symbol configured in the slot is not detected. That is, there is uncertainty in the transmission of the sidelink signal. For example, as shown in Figure 2 and Figure 3, the AGC symbol is monitored at a third symbol, but the LBT fails and the channel is not detected as idle, then the PSSCH transmission will not be possible. A position of the AGC symbol can be understood as a transmission start position for sidelink transmission.

In view of this, embodiments of the present disclosure provide a method for communication based on a PSSCH. In the method, a PSSCH structure is provided, and the PSSCH includes more than one transmission start position, i.e., sidelink resources for sidelink signal transmission include more than one transmission start position for a sidelink signal, and the sidelink signal is transmitted on an unlicensed frequency band based on the more than one transmission start position.

Fig. 4 is a flow chart showing a method for communication based on a PSSCH according to an exemplary embodiment. As shown in Fig. 4, the method for communication based on a PSSCH is applied to a terminal and includes the following steps.

In step S11, the PSSCH is determined, in which the PSSCH includes more than one transmission start position for a sidelink signal.

In step S12, the sidelink signal is transmitted on an unlicensed frequency band based on the more than one transmission start position.

In the embodiment of the present disclosure, the PSSCH including more than one transmission start position of the sidelink signal may be understood as introducing more than one PSSCH transmission start position in a sidelink slot. Transmitting the sidelink signal on the unlicensed frequency band based on more than one transmission start position can increase the possibility of PSSCH transmission after successful LBT, thereby increasing the probability of successful PSSCH transmission of the sidelink signal on the unlicensed frequency band.

At present, 3GPP R16 has completed the technical solution and working mechanism of NR sidelink and NR unlicensed (NR-U). Therefore, for sidelink-unlicensed in embodiments of the present disclosure, reference and reuse part of the technical solution and working mechanism of 3GPP R16NR sidelink and NR-U.

In an implementation, in the embodiment of the present disclosure, a mini slot may be introduced into the sidelink-unlicensed. More than one mini slot are included in the PSSCH, i.e., one slot contains more than one mini slot. In one slot, the number of mini slots in the physical sidelink shared channel is equal to the number of transmission start positions for the sidelink signal. In each of the more than one mini slot, a first symbol is an AGC symbol, a last symbol is a GP symbol, and symbols between the AGC symbol and the GP symbol are configured to transmit the sidelink signal.

In an example, the mini slot structure is introduced into the unlicensed frequency band, and one mini slot includes one transmission start position of the PSSCH, i.e., a position where the AGC symbol starts. In each mini slot, the first symbol is AGC, from the second symbol to the last symbol are the PSSCH/PSCCH transmission symbols, and the last symbol is GP.

The number of mini slots included in the PSSCH in the embodiment of the present disclosure may be determined based on the number of symbols configured to transmit the sidelink signal and the symbol length supported by the mini slots.

In the embodiment of the present disclosure, the number of symbols configured to transmit the sidelink signal may be determined based on a sidelink start symbol (sl-StartSymbol) and sidelink symbol length (sl-LengthSymbols). The sl-StartSymbol information field is configured by radio resource control (RRC), reuses existing parameters in R16, and indicates the start symbol that can be used for the sidelink symbol in a slot, and the value is {0, 1, 2, 3, 4, 5, 6, 7}. The sl-LengthSymbols information field is configured by RRC, reuses the existing parameters in R16, and indicates the symbol length that can be used for sidelink in a slot, and the value is: {7, 8, 9, 10, 11, 12, 13, 14}.

The symbol length supported by the mini slots in the embodiment of the present disclosure may reuse the length of the mini slots in the NR-U.

Furthermore, in the embodiments of the present disclosure, there may also be physical sidelink feedback channel (PSFCH) resources in the resources allocated for sidelink signal transmission. PSFCH usually occupies a symbol that is located in the penultimate symbol of a slot, and it needs to configure an AGC symbol for PSFCH resources that is located in the third symbol from the end in a slot, and configure a GP symbol in the fourth symbol from the end. Therefore, when determining the number of mini slots included in the PSSCH, PSFCH resources also need to be considered. That is, the number of mini slots included in the PSSCH may be determined based on the number of symbols configured to transmit the sidelink signal, the symbol length supported by the mini slots, and PSFCH resources.

In other words, in the embodiment of the present disclosure, when PSFCH resources are not configured, the number of mini slots may be determined based on the number of symbols configured to transmit the sidelink signal and the symbol length supported by the mini slots.

In an example, sl-PSFCH-Period=0, indicating that PSFCH resources are not configured. In a case that sl-PSFCH-Period=0 and PSFCH resources are not configured, the number of mini slots may be determined based on the number of symbols configured to transmit the sidelink signal and the symbol length supported by the mini slots.

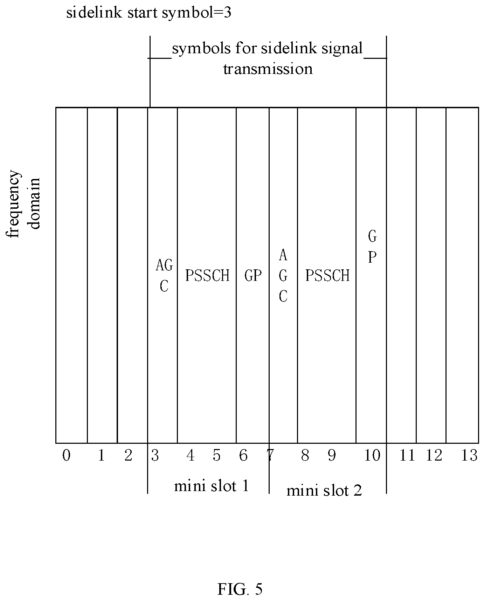

Fig. 5 shows a PSSCH structure according to an exemplary embodiment of the present disclosure. Referring to FIG. 5, when configuring the PSSCH, the number of symbols configured to transmit the sidelink signal and the symbol length supported by the mini slot are considered. The number of symbols for the sidelink signal may be determined by sl-LengthSymbols. In the embodiment of the present disclosure, it is set that sl-LengthSymbols=8, and the supported mini slot length is 4 symbols, so 2 mini slots may be introduced when configuring PSSCH, that is, two positions where PSSCH transmission starts. In the embodiment of the present disclosure, during resource mapping, the traditional NR sidelink resource mapping method is reused, frequency domain mapping is performed first, and then time domain mapping is performed, until all symbols are mapped. In the PSSCH structure shown in FIG. 5, due to the two PSSCH transmission positions being separated by a symbol configured for GP, and no transmission of control and data information performed on this symbol, there are two ways of resource mapping as follows:
Mode 1: the symbol of the GP is performed rate matching in resource mapping.
Mode 2: the symbol of the GP is punctured.

In another embodiment of the present disclosure, in the case of configuring PSSCH resources, the number of mini slots may be determined based on the number of symbols configured to transmit the sidelink signal, the symbol length supported by the mini slots, and the PSFCH resources.

In an example, sl-PSFCH-Period≠0 indicates that PSFCH resources are configured. In a case that sl-PSFCH-Period≠0 and PSFCH resources are configured, the number of mini slots can be determined based on the number of symbols configured to transmit the sidelink signal, the symbol length supported by the mini slots, and the PSFCH resources. In other words, in the case of sl-PSFCH-Period≠0, when configuring PSFCH, it needs to consider that 3 symbols are additionally occupied, that is: 1 symbol occupied by PSFCH, and 1 symbol is introduced to be used as GP and 1 symbol is introduced to be used as AGC due to the PSFCH.

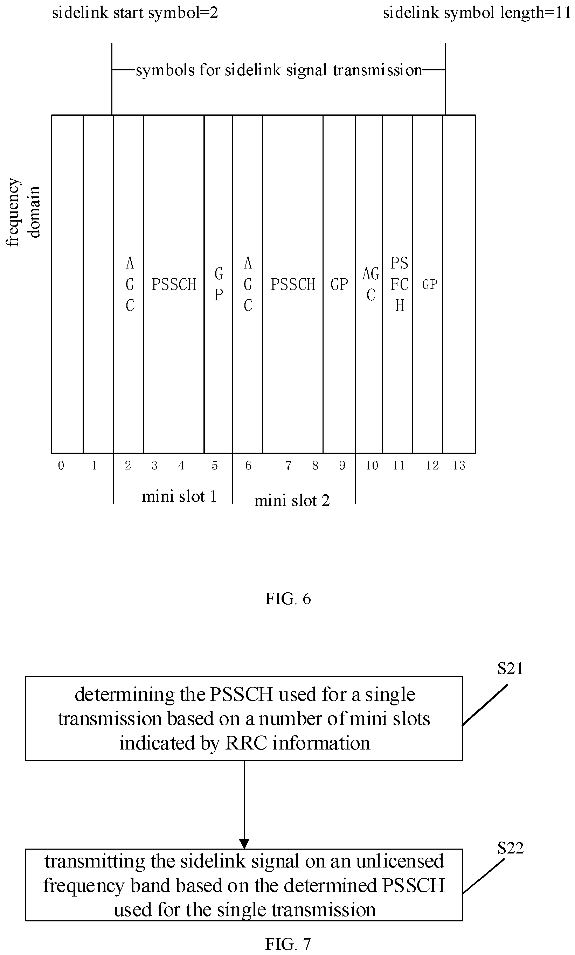

Fig. 6 shows a PSSCH structure according to an exemplary embodiment of the present disclosure. Referring to FIG. 6, when configuring the PSSCH, the number of symbols configured to transmit the sidelink signal, the symbol length supported by the mini slots, and PSFCH resources are considered. The number of symbols of the sidelink signal may be determined by sl-LengthSymbols. In the embodiment of the present disclosure, it is set that sl-LengthSymbols=11, the supported mini slot length is 4 symbols, and PSFCH occupies one symbol. Two mini slots are introduced, and two positions where the PSSCH transmission starts are introduced. The two PSSCH transmission positions are separated by the symbols configured for AGC and GP.

In the embodiment of the present disclosure, during resource mapping, the traditional NR sidelink resource mapping method is reused, frequency domain mapping is performed first, and then time domain mapping is performed, until all symbols are mapped. In the PSSCH structure shown in FIG. 6, due to the two PSSCH transmission positions separated by the symbols configured for AGC and GP, and no transmission of control and data information performed on the GP symbol, there are two ways of resource mapping as follows:
Mode 1: the symbol of the GP is performed rate matching in resource mapping.
Mode 2: the symbol of the GP is punctured

Further, in the embodiment of the present disclosure, more than one type of PSSCH may be configured, and when sidelink signal transmission is performed, the PSSCH used for a single transmission required for each transmission is determined among the more than one type of configured PSSCH.

In the embodiment of the present disclosure, each type of PSSCH of the more than one type of PSSCH includes more than one mini slot, each mini slot has a transmission start position, and numbers of mini slots included in respective PSSCHs are different. That is, each number of mini slots corresponds to one type of PSSCH.

In some possible implementations, each of the more than one type of PSSCH includes more than one mini slot, each mini slot has a transmission start position, and the numbers of mini slots included in respective PSSCHs are different. In some other possible implementations, some PSSCHs among the more than one type of PSSCH include more than one mini slot, each mini slot has a transmission start position, and the number of mini slots included in respective PSSCHs are different.

It can be understood that each of the more than one type of PSSCH in the embodiments of the present disclosure is applicable to the PSSCH structure involved in the foregoing embodiments, and for details, reference may be made to relevant descriptions of the foregoing embodiments.

In an example, more than one type of PSSCH structure is configured, and each type of PSSCH structure includes a different number of mini slots, and the number of mini slots is determined by the supported mini slot length and sl-PSFCH-Period (whether PSFCH resources are configured). That is, the number of mini slots is determined by the number of symbols available for sidelink transmission.

In the embodiment of the present disclosure, the more than one type of configured PSSCH may be predetermined for the terminal and the network device, for example, using a pre-configuration.

In an implementation, in the embodiments of the present disclosure, the network device may configure the more than one type of PSSCH, and indicate the configured more than one type of PSSCH to the terminal.

When determining the PSSCH used for a single transmission, the PSSCH used for a single transmission may be determined among the more than one type of PSSCH based on the indication information.

In an implementation, the PSSCH used for a single transmission may be indicated based on RRC information.

The PSSCH includes more than one mini slot, and the number of mini slots is equal to the number of transmission start positions, and each type of PSSCH corresponds to a number of mini slots. Therefore, in the embodiment of the present disclosure, the PSSCH may be indicated by indicating the number of mini slots.

Fig. 7 is a flow chart of a method for communication based on a PSSCH according to an exemplary embodiment. As shown in Fig. 7, the method for communication based on a PSSCH is applied to a terminal and includes the following steps.

In step S21, the PSSCH used for a single transmission is determined based on a number of mini slots indicated by RRC information, in which the number of mini slots corresponds to a type of PSSCH.

The PSSCH used for a single transmission includes more than one mini slot, and each mini slot has a transmission start position of PSSCH, that is, the position where the AGC symbol starts. In each mini slot, the first symbol is AGC, and from the second symbol to the last symbol are the PSSCH/PSCCH transmission symbols, and the last symbol is GP.

In step S22, the sidelink signal is transmitted on an unlicensed frequency band based on the determined PSSCH used for the single transmission.

In the method for communication based on a PSSCH provided by the embodiment of the present disclosure, the PSSCH used for a single transmission is determined based on the number of mini slots indicated by the RRC information, and the PSSCH used for the single transmission includes more than one transmission start position for the sidelink signal, the sidelink signal is transmitted on the unlicensed frequency band based on the more than one transmission start position, which can increase the transmission opportunity of the physical sidelink shared channel after the LBT is successful.

Based on the same inventive concept, embodiments of the present disclosure also provide a method for communication based on a PSSCH applied to a network device.

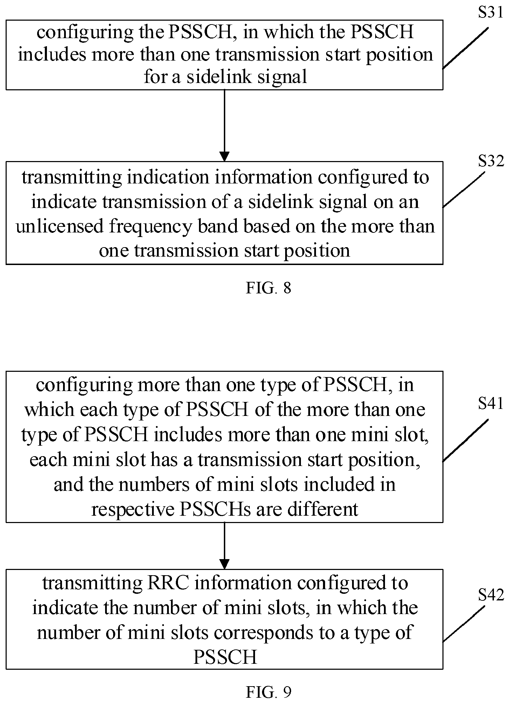

Fig. 8 is a flow chart showing a method for communication based on a PSSCH according to an exemplary embodiment. As shown in Fig. 8, the method for communication based on a PSSCH is applied to a network device and includes the following steps.

In step S31, the PSSCH is configured, in which the PSSCH includes more than one transmission start position for a sidelink signal.

In step S32, indication information, that is configured to indicate transmission of a sidelink signal on an unlicensed frequency band based on the more than one transmission start position, is transmitted.

In an implementation, the PSSCH includes resources of more than one mini slot scheduling shared channel, a number of mini slots in the PSSCH is equal to a number of transmission start positions for the sidelink signal. A first symbol in each mini slot of the more than one mini slot is an AGC symbol, a last symbol is a GP symbol, and symbols between the AGC symbol and the GP symbol are configured to transmit the sidelink signal.

In an implementation, the number of mini slots is determined based on a number of symbols configured to transmit the sidelink signal and symbol length supported by the mini slots. In another implementation, the number of mini slots is determined based on a number of symbols configured to transmit the sidelink signal, symbol length supported by the mini slots, and physical sidelink feedback channel resources.

In an implementation, more than one type of PSSCH is configured. Each type of PSSCH of the more than one type of PSSCH includes more than one mini slot, each mini slot has a transmission start position, and the numbers of mini slots included in respective PSSCHs are different.

In some possible implementations, each of the more than one type of PSSCH includes more than one mini slot, each mini slot has a transmission start position, and the numbers of mini slots included in respective PSSCHs are different. In some other possible implementations, some PSSCHs of the more than one PSSCH include more than one mini slot, each mini slot has a transmission start position, and the numbers of mini slots included in respective PSSCHs are different.

In the embodiment of the present disclosure, in the case of configuring more than one type of PSSCH, the network device may indicate the PSSCH used for a single transmission by indication information.

In an implementation, transmitting the indication information includes:
transmitting RRC information configured to indicate a number of mini slots, in which the number of mini slots corresponds to a type of PSSCH.

Fig. 9 is a flow chart showing a method for communication based on a PSSCH according to an exemplary embodiment. As shown in Fig. 9, the method for communication based on a PSSCH is applied a network device and includes the following steps.

In step S41, more than one type of PSSCH are configured, each type of PSSCH of the more than one type of PSSCH includes more than one mini slot, each mini slot has a transmission start position, and the numbers of mini slots included in respective PSSCHs are different.

In step S42, RRC information that is configured to indicate the number of mini slots is transmitted, in which the number of mini slots corresponds to a type of PSSCH structure.

In the embodiment of the present disclosure, more than one type of PSSCH structure is configured, and each type of PSSCH structure includes more than one mini slot, and each mini slot has a PSSCH transmission start position. By transmitting the RRC information indicating the number of mini slots and thus indicating the PSSCH structure used for a single transmission, the terminal can perform sidelink signal transmission on an unlicensed frequency band based on more than one transmission start position of a type of PSSCH in a single transmission.

In some possible implementations, each type of PSSCH of the more than one type of PSSCH includes more than one mini slot, each mini slot has a transmission start position, and the numbers of mini slots included in respective PSSCHs are different. In some other possible implementations, some PSSCHs of the more than one type of PSSCH include more than one mini slot, each mini slot has a transmission start position, and the numbers of mini slots included in respective PSSCHs are different.

It can be understood that, in the embodiments of the present disclosure, the PSSCH structure involved in the method for communication based on a PSSCH applied to the network device is the same as the PSSCH structure involved in the method for communication based on a PSSCH applied to the terminal. Therefore, for the description of the PSSCH structure involved in the method for communication based on a PSSCH applied to the network device is not detailed enough, reference may be made to the relevant descriptions of the foregoing embodiments, and no further details are given here.

It can be further understood that the method for communication based on a PSSCH provided in the embodiments of the present disclosure is applicable to a process in which a network device interacts with a terminal to implement the method for communication based on a PSSCH. When the network device and the terminal interact to implement the PSSCH communication process, both the network device and the terminal have relevant functions in the foregoing embodiments, which will not be described in detail here.

It should be noted that those skilled in the art can understand that the various implementations/embodiments mentioned above in the embodiments of the present disclosure can be used in conjunction with the foregoing embodiments, or can be used independently. Whether it is used alone or in combination with the foregoing embodiments, its implementation principles are similar. During the implementation of the present disclosure, some embodiments are described in the manner of being used together. Of course, those skilled in the art can understand that such illustrations are not limitations to the embodiments of the present disclosure.

Based on the same idea, embodiments of the present disclosure also provides an apparatus for communication device based on a PSSCH.

It can be understood that, in order to realize the above functions, the apparatus for communication based on a PSSCH provided by the embodiments of the present disclosure includes corresponding hardware structures and/or software modules for performing various functions. Combining the units and algorithm steps of each example disclosed in the embodiments of the present disclosure, the embodiments of the present disclosure can be implemented in the form of hardware or a combination of hardware and computer software. Whether a certain function is executed by hardware or computer software drives hardware depends on the specific application and design constraints of the technical solution. Those skilled in the art may use different methods to implement the described functions for each specific application, but such implementation should not be regarded as exceeding the scope of the technical solutions of the embodiments of the present disclosure.

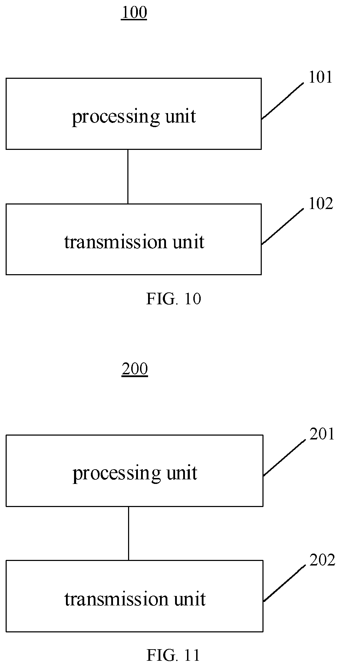

Fig. 10 is a block diagram of an apparatus for communication based on a PSSCH according to an exemplary embodiment. Referring to Fig. 10, the apparatus for communication based on a PSSCH is applied to a terminal, and includes a processing unit 101 and a transmission unit 102.

The processing unit 101 is configured to determine the PSSCH, in which the PSSCH includes more than one transmission start position for a sidelink signal. The transmission unit 102 is configured to transmit a sidelink signal on an unlicensed frequency band based on the more than one transmission start position.

In an implementation, the PSSCH includes resources of more than one mini slot scheduling shared channel, and a number of mini slots in the physical sidelink shared channel is equal to a number of transmission start positions for the sidelink signal. A first symbol in each of the more than one mini slot is an AGC symbol, a last symbol in each of the more than one mini slot is a GP symbol, and symbols between the AGC symbol and the GP symbol are configured to transmit the sidelink signal.

In an implementation, the number of mini slots is determined based on a number of symbols configured to transmit the sidelink signal and symbol length supported by the mini slots.

In an implementation, the number of mini slots is determined based on a number of symbols configured to transmit the sidelink signal, symbol length supported by the mini slots, and physical sidelink feedback channel resources.

In an implementation, the processing unit 101 determines a PSSCH used for a single transmission among more than one type of configured PSSCH. Each type of PSSCH of the more than one type of PSSCH includes more than one mini slot, in which each type of PSSCH of all types of PSSCH in the more than one type of configured PSSCH includes more than one mini slot. Each mini slot has a transmission start position, and numbers of mini slots included in respective PSSCHs are different.

In an implementation, the processing unit 101 determines the PSSCH used for a single transmission based on a number of mini slots indicated by radio resource control information, in which the number of mini slots corresponds to a type of PSSCH.

Fig. 11 is a block diagram of an apparatus for communication based on a PSSCH according to an exemplary embodiment. Referring to Fig. 11, the apparatus 200 for communication based on a PSSCH is applied to a network device, and includes a processing unit 201 and a transmission unit 202.

The processing unit 201 is configured to configure the PSSCH, in which the PSSCH includes more than one transmission start position for a sidelink signal. The transmission unit 202 is configured to transmit indication information configured to indicate transmission of a sidelink signal on an unlicensed frequency band based on the more than one transmission start position.

In an implementation, the PSSCH includes resources of more than one mini slot scheduling shared channel, and a number of mini slots in the physical sidelink shared channel is equal to a number of transmission start positions for the sidelink signal. A first symbol in each of the more than one mini slot is an AGC symbol, a last symbol in each of the more than one mini slot is a GP symbol, and symbols between the AGC symbol and the GP symbol are configured to transmit the sidelink signal.

In an implementation, the number of mini slots is determined based on a number of symbols configured to transmit the sidelink signal and symbol length supported by the mini slots.

In an implementation, the number of mini slots is determined based on a number of symbols configured to transmit the sidelink signal, symbol length supported by the mini slots, and physical sidelink feedback channel resources.

In an implementation, the processing unit 201 configures more than one type of configured PSSCH. Each type of PSSCH of the more than one type of PSSCH includes more than one mini slot. Each type of PSSCH of all types of PSSCH in the more than one type of configured PSSCH includes more than one mini slot. Each mini slot has a transmission start position, and numbers of mini slots included in respective PSSCHs are different.

In an implementation, the transmission unit 202 transmits radio resource control information configured to indicate a number of mini slots, in which the number of mini slots corresponds to a type of PSSCH.

Regarding the apparatuses in the foregoing embodiments, the specific manner in which each module executes operations has been described in detail in the embodiments related to the method, and will not be described in detail here.

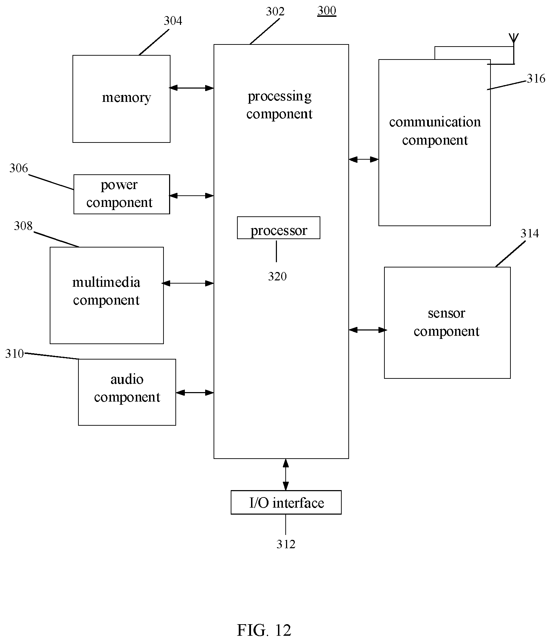

FIG. 12 is a block diagram of an apparatus 300 for communication based on a PSSCH according to an embodiment of the present disclosure. For example, the apparatus 300 may be a mobile phone, computer, digital broadcast terminal, messaging device, game console, tablet device, medical device, fitness device, personal digital assistant, and the like.

Referring to FIG. 12, the apparatus 300 may include at least one of the following components: a processing component 302, a memory 304, a power component 306, a multimedia component 308, an audio component 310, an input/output (I/O) interface 312, a sensor component 314, and a communication component 316.

The processing component 302 typically controls overall operations of the apparatus 300, such as the operations associated with display, telephone calls, data communications, camera operations, and recording operations. The processing component 302 may include at least one processor 320 to execute instructions to perform all or part of the steps in the above described method. Moreover, the processing component 302 may include at least one module which facilitates the interaction between the processing component 302 and other components. For example, the processing component 302 may include a multimedia module to facilitate the interaction between the multimedia component 308 and the processing component 302.

The memory 304 is configured to store various types of data to support the operation of the apparatus 300. Examples of such data include instructions for any applications or methods operated on the apparatus 300, contact data, phonebook data, messages, pictures, video, etc. The memory 304 may be implemented using any type of volatile or non-volatile memory devices, or a combination thereof, such as a Static Random Access Memory (SRAM), an Electrically Erasable Programmable Read-Only Memory (EEPROM), an Erasable Programmable Read-Only Memory (EPROM), a programmable read-only memory (PROM), a Read-Only Memory (ROM), a magnetic memory, a flash memory, a magnetic or optical disk.

The power component 306 provides power to various components of the apparatus 300. The power component 306 may include a power management system, one or more power sources, and any other components associated with the generation, management, and distribution of power in the apparatus 300.

The multimedia component 308 includes a screen providing an output interface between the apparatus 300 and the user. In some embodiments, the screen may include a Liquid Crystal Display (LCD) and a Touch Panel (TP). In a case that the screen includes the touch panel, the screen may be implemented as a touch screen to receive input signals from the user. The touch panel includes at least one touch sensor to sense touches, swipes, and gestures on the touch panel. The touch sensors may not only sense a boundary of a touch or swipe action, but also sense a period of time and a pressure associated with the touch or swipe action. In some embodiments, the multimedia component 308 includes a front-facing camera and/or a rear-facing camera. When the apparatus 300 is in an operating mode, such as a shooting mode or a video mode, the front-facing camera and/or the rear-facing camera can receive external multimedia data. Each front-facing camera and rear-facing camera may be a fixed optical lens system or has focal length and optical zoom capability.

The audio component 310 is configured to output and/or input audio signals. For example, the audio component 310 includes a microphone (MIC) configured to receive an external audio signal when the apparatus 300 is in an operation mode, such as a call mode, a recording mode, and a voice recognition mode. The received audio signal may be further stored in the memory 304 or transmitted via the communication component 316. In some embodiments, the audio component 310 further includes a speaker to output audio signals.

The I/O interface 312 provides an interface between the processing component 302 and peripheral interface modules, such as a keyboard, a click wheel, buttons, and the like. The buttons may include, but are not limited to, a home button, a volume button, a starting button, and a locking button.

The sensor component 314 includes one or more sensors to provide status assessments of various aspects of the apparatus 300. For instance, the sensor component 314 may detect an open/closed status of the apparatus 300, relative positioning of components, e.g., the display and the keypad of the apparatus 300, and the sensor component 314 may further detect a change in position of the apparatus 300 or a component of the apparatus 300, a presence or absence of user contact with the apparatus 300, an orientation or an acceleration/deceleration of the apparatus 300, and a change in temperature of the apparatus 300. The sensor component 314 may include a proximity sensor configured to detect the presence of nearby objects without any physical contact. The sensor component 314 may also include a light sensor, such as a CMOS or CCD image sensor, for use in imaging applications. In some embodiments, the sensor component 314 may also include an accelerometer sensor, a gyroscope sensor, a magnetic sensor, a pressure sensor, or a temperature sensor.

The communication component 316 is configured to facilitate communication, wired or wirelessly, between the apparatus 300 and other devices. The apparatus 300 can access a wireless network based on a communication standard, such as WiFi, 2G or 3G, or a combination thereof. In an exemplary embodiment, the communication component 316 receives a broadcast signal or broadcast associated information from an external broadcast management system via a physical broadcast channel. In an embodiment, the communication component 316 further includes a near field communication (NFC) module to facilitate short-range communication. For example, the NFC module may be implemented based on radio frequency identification (RFID) technology, infrared data association (IrDA) technology, ultra-wideband (UWB) technology, Bluetooth (BT) technology and other technologies.

In exemplary embodiments, the apparatus 300 may be implemented with at least one application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as the memory 304 including instructions that are executable by the processor 320 in the apparatus 300, for performing the above described methods. For example, the non-transitory computer-readable storage medium may be a ROM, a RAM, a CD-ROM, a magnetic tape, a floppy disc, an optical data storage device, and the like.

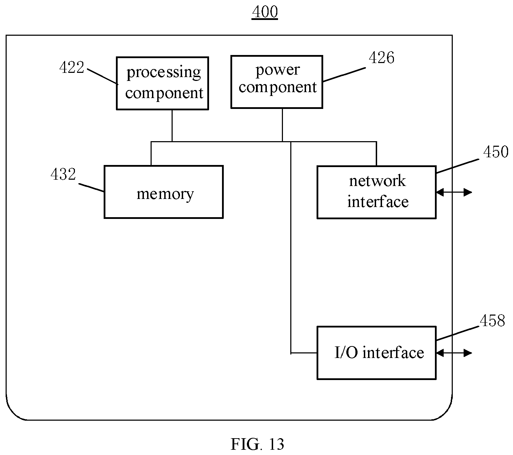

Fig. 13 is a block diagram showing an apparatus 400 for communication based on a PSSCH according to an exemplary embodiment. For example, the apparatus 400 may be provided as a server. Referring to FIG. 13, the apparatus 400 includes a processing component 422, which further includes one or more processors, and a memory resource represented by a memory 432 for storing instructions executable by the processing component 422, such as application programs. The application program stored in the memory 432 may include one or more modules each corresponding to a set of instructions. In addition, the processing component 422 is configured to execute instructions to perform the above method.

The apparatus 400 may also include a power component 426 configured to perform power management of the apparatus 400, a wired or wireless network interface 450 configured to connect the apparatus 400 to a network, and an input-output (I/O) interface 458 . The apparatus 400 can operate based on an operating system stored in the memory 432, such as Windows Server^{™}, Mac OS X^{™}, Unix^{™}, Linux^{™}, FreeBSD^{™} or the like.

In an exemplary embodiment, the apparatus 400 may be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors or other electronic components, for performing the above described method.

In exemplary embodiments, there is also provided a non-transitory computer-readable storage medium including instructions, such as the memory 432 including instructions that are executable by the processing component 422 in the apparatus 400, for performing the above described methods. For example, the non-transitory computer-readable storage medium may be a ROM, a RAM, a CD-ROM, a magnetic tape, a floppy disc, an optical data storage device, and the like.

It can be further understood that "a plurality of" in the present disclosure refers to two or more, and other quantifiers are similar thereto. "And/or" describes the association relationship of associated objects, indicating that there may be three types of relationships, for example, A and/or B may indicate three cases that: A exists alone, A and B exist simultaneously, and B exists alone. The character "/" generally indicates that the contextual objects are an "or" relationship. The singular forms "a", "an" and "this" are also intended to include the plural unless the context clearly dictates otherwise.

It can be further understood that the terms "first", "second", etc. are used to describe various information, but the information should not be limited to these terms. These terms are only used to distinguish information of the same type from one another, and do not imply a specific order or degree of importance. In fact, expressions such as "first" and "second" can be used interchangeably. For example, without departing from the scope of the present disclosure, first information may also be called second information, and similarly, second information may also be called first information.

It can be further understood that although operations are described in a specific order in the drawings in the embodiments of the present disclosure, it should not be understood as requiring that these operations be performed in the specific order shown or in a serial order, or that all operations shown are performed to obtain the desired result. In certain circumstances, multitasking and parallel processing may be advantageous.

Other implementations of the present disclosure will be readily apparent to those skilled in the art from consideration of the specification and practice of the invention disclosed herein. The application is intended to cover any modification, use or adaptation of the present disclosure, these modifications, uses or adaptations follow the general principle of the invention and include common knowledge or conventional technical means in the technical field not disclosed in the present disclosure. The specification and embodiments are to be considered exemplary only, with a true scope and spirit of the disclosure being indicated by the following claims.

It is to be understood that the present disclosure is not limited to the precise structures described above and illustrated in the accompanying drawings, and that various modifications and changes may be made without departing from the scope thereof. The scope of the present disclosure is limited only by the appended claims.

## Claims

1. A method for communication based on a physical sidelink shared channel, applied to a terminal, comprising:
determining the physical sidelink shared channel, wherein the physical sidelink shared channel comprises more than one transmission start position for a sidelink signal; and
transmitting a sidelink signal on an unlicensed frequency band based on the more than one transmission start position.

2. The method according to claim 1, wherein the physical sidelink shared channel comprises resources of more than one mini slot scheduling shared channel, and a number of mini slots in the physical sidelink shared channel is equal to a number of transmission start positions for the sidelink signal, and
a first symbol in each of the more than one mini slot is an automatic gain control symbol, a last symbol in each of the more than one mini slot is a gap protect symbol, and symbols between the automatic gain control symbol and the gap protect symbol are configured to transmit the sidelink signal.

3. The method according to claim 2, wherein the number of mini slots is determined based on a number of symbols configured to transmit the sidelink signal and symbol length supported by the mini slots.

4. The method according to claim 2, wherein the number of mini slots is determined based on a number of symbols configured to transmit the sidelink signal, symbol length supported by the mini slots, and physical sidelink feedback channel resources.

5. The method according to any one of claims 1 to 4, wherein determining the physical sidelink shared channel comprises:
determining a physical sidelink shared channel used for a single transmission among more than one type of configured physical sidelink shared channel;
wherein each type of physical sidelink shared channel of the more than one type of physical sidelink shared channel comprises more than one mini slot that each has a transmission start position, and numbers of mini slots comprised in respective physical sidelink shared channels are different.

6. The method according to claim 5, wherein determining the physical sidelink shared channel comprises:
determining the physical sidelink shared channel used for a single transmission based on a number of mini slots indicated by radio resource control information, wherein the number of mini slots corresponds to a type of physical sidelink shared channel.

7. A method for communication based on a physical sidelink shared channel, applied to a network device, comprising:
configuring the physical sidelink shared channel, wherein the physical sidelink shared channel comprises more than one transmission start position for a sidelink signal; and
transmitting indication information configured to indicate transmission of a sidelink signal on an unlicensed frequency band based on the more than one transmission start position.

8. The method according to claim 7, wherein the physical sidelink shared channel comprises resources of more than one mini slot scheduling shared channel, and a number of mini slots in the physical sidelink shared channel is equal to a number of transmission start positions for the sidelink signal, and
a first symbol in each of the more than one mini slot is an automatic gain control symbol, a last symbol in each of the more than one mini slot is a gap protect symbol, and symbols between the automatic gain control symbol and the gap protect symbol are configured to transmit the sidelink signal.

9. The method according to claim 8, wherein the number of mini slots is determined based on a number of symbols configured to transmit the sidelink signal and symbol length supported by the mini slots.

10. The method according to claim 8, wherein the number of mini slots is determined based on a number of symbols configured to transmit the sidelink signal, symbol length supported by the mini slots, and physical sidelink feedback channel resources.

11. The method according to any one of claims 7 to 10, wherein configuring the physical sidelink shared channel comprises:
configuring more than one type of physical sidelink shared channel;
wherein each type of physical sidelink shared channel of the more than one type of physical sidelink shared channel comprises more than one mini slot that each has a transmission start position, and numbers of mini slots comprised in respective physical sidelink shared channels are different; and
the indication information is configured to indicate a physical sidelink shared channel used for a single transmission.

12. The method according to claim 11, wherein transmitting the indication information comprises:
transmitting radio resource control information configured to indicate a number of mini slots, wherein the number of mini slots corresponds to a type of physical sidelink shared channel.

13. An apparatus for communication based on a physical sidelink shared channel, comprising:
a processing unit, configured to determine the physical sidelink shared channel, wherein the physical sidelink shared channel comprises more than one transmission start position for a sidelink signal; and
a transmission unit, configured to transmit a sidelink signal on an unlicensed frequency band based on the more than one transmission start position.

14. An apparatus for communication based on a physical sidelink shared channel, comprising:
a processing unit, configured to configure the physical sidelink shared channel, wherein the physical sidelink shared channel comprises more than one transmission start position for a sidelink signal; and
a transmission unit, configured to transmit indication information configured to indicate transmission of a sidelink signal on an unlicensed frequency band based on the more than one transmission start position.

15. An apparatus for communication based on a physical sidelink shared channel, comprising:
a processor; and
a memory for storing a computer program executable by the processor;
wherein the processor is configured to perform the method for communication based on a physical sidelink shared channel according to any one of claims 1 to 6.

16. An apparatus for communication based on a physical sidelink shared channel, comprising:
a processor; and
a memory for storing a computer program executable by the processor;
wherein the processor is configured to perform the method for communication based on a physical sidelink shared channel according to any one of claims 7 to 12.

17. A storage medium having instructions stored thereon, wherein the instructions in the storage medium, when being executed by a processor of a terminal, enable the terminal to perform the method for communication based on a physical sidelink shared channel according to any one of claims 1 to 6.

18. A storage medium having instructions stored thereon, wherein the instructions in the storage medium, when being executed by a processor of a network device, enable the terminal to perform the method for communication based on a physical sidelink shared channel according to any one of claims 7 to 12.
